# EUROPÄISCHE PATENTSCHRIFT

(11) **EP 1 763 444 B1**
(45) Veröffentlichungstag und Bekanntmachung des Hinweises auf die Patenterteilung: **10.03.2010**
(21) Anmeldenummer: 05761826.6
(22) Anmeldetag: 05.07.2005
(51) Int. Cl.: B60G 21/055, F16D 41/12

(54) **STABILISATOR FÜR EIN KRAFTFAHRZEUG**
STABILISER FOR A MOTOR VEHICLE
STABILISATEUR DESTINE A UN VEHICULE

(30) Priorität: 07.07.2004 DE 102004032744
(43) Veröffentlichungstag der Anmeldung: 21.03.2007
(73) Patentinhaber: ZF Friedrichshafen AG, 88038 Friedrichshafen (DE)
(72) Erfinder: REITZ, Peter, 88099 Neukirch (DE); KINZELMANN, Wolfgang, 88281 Schlier/Hintermoos (DE); MÜLLER, Ingo, 97421 Schweinfurt (DE); MOSCH, Hans-Jürgen, 88069 Tettnang (DE); VORTMEYER, Jens, 32361 Preussisch-Oldendorf (DE); PYDDE, Lutz, 49401 Damme (DE)
(86) Internationale Anmeldenummer: PCT/DE2005/001180
(87) Internationale Veröffentlichungsnummer: WO 2006/005309

(56) Entgegenhaltungen:
- EP-A- 1 236 592
- DE-A1- 10 126 928
- US-A1- 2003 122 342

## Beschreibung

Die Erfindung betrifft einen Stabilisator für ein Kraftfahrzeug gemäß der im Oberbegriff des Patentanspruches 1 näher definierten Art.

Aus der DE 101 26 928 A1 ist ein Stabilisator der eingangs genannten Art bekannt, der einen in zwei Wellen geteilten Torsionsfederstab aufweist, die über eine mechanische Kupplung miteinander verbindbar sind. Die Kupplung ist mit einer mit einer ersten Welle drehfest verbundenen Rastscheibe ausgeführt, an deren Umfang wenigstens ein Rastbereich ausgebildet ist. Des Weiteren ist ein mit der zweiten Welle drehfest verbundenes Gehäuse vorgesehen. An dem Gehäuse ist wenigstens ein zu dem Rastbereich der Rastscheibe komplementär ausgebildetes Rastmittel bewegbar gelagert, welches in gekuppeltem Zustand der Kupplung mit dem Rastbereich derart in Eingriff steht, dass die Kupplung geschlossen ist und die beiden Wellen drehfest miteinander verbunden sind.

Ferner ist eine Feder mit dem Gehäuse und dem Rastmittel verbunden, von welcher das Rastmittel in Richtung der Rastscheibe vorgespannt ist. Zum Umschalten zwischen dem gekuppelten und dem entkuppelten Zustand der Kupplung ist eine mit dem Gehäuse verbundene Freigabeeinrichtung mit einer Antriebsquelle vorgesehen, mittels welcher das Rastmittel im entkuppelten Zustand gegen die von der Feder ausgeübte Kraft außer Eingriff mit dem Rastbereich gehalten wird.

Der aus dem Stand der Technik bekannte Stabilisator hat jedoch den Nachteil, dass das Rastmittel, welches beim Auskuppelvorgang der Kupplung entgegen der Federkraft der Feder und entgegen einer aus der Reibung zwischen dem Rastmittel und der Rastscheibe resultierenden zusätzlichen Haltekraft aus dem Eingriff mit der Rastscheibe geführt wird, nach Überwinden der Reibkraft bzw. der zusätzlichen Haltekraft derart beschleunigt wird, dass das Rastmittel schlagartig aus dem Eingriff mit der Rastscheibe gebracht wird und mit hoher Geschwindigkeit auf das Gehäuse des Stabilisators auftrifft, was unerwünschte und von einem Fahrer als unkomfortabel empfundene Schläge zur Folge hat.

Der vorliegenden Erfindung liegt daher die Aufgabe zugrunde, einen Stabilisator für ein Kraftfahrzeug zur Verfügung zu stellen, bei dem während der Ansteuerung keine einen Fahrkomfort beeinträchtigenden Schläge auftreten.

Erfindungsgemäß wird diese Aufgabe mit einem Stabilisator gemäß den Merkmalen des Patentanspruches 1 gelöst.

Der erfindungsgemäße Stabilisator für ein Kraftfahrzeug, der mit zwei in Fahrzeugquerrichtung verlaufenden und über eine mechanische Kupplung miteinander koppelbaren Wellen ausgeführt ist, wobei die Wellen jeweils mit ihren der Kupplung abgewandten Enden mit Reifen des Fahrzeugs in Wirkverbindung stehen und eine erste Welle mit einer als Rastscheibe ausgeführten ersten Kupplungshälfte und eine zweite Welle mit einer mit der Rastscheibe zusammenwirkenden zweiten als Rastmittel ausgeführten Kupplungshälfte verbunden ist, wobei das Rastmittel ein von einer Antriebsquelle entgegen einer Federeinrichtung rotatorisch antreibbaren Kurvenscheibe ansteuerbares Klinkenelement und ein damit verbundenes Sperrglied aufweist, über welches die Wellen in einer ersten Endstellung der Kurvenscheibe aufgrund einer kraftschlüssigen Verbindung zwischen der Rastscheibe und dem Sperrglied drehfest verbunden sind und die kraftschlüssige Verbindung in einer zweiten Endstellung der Kurvenscheibe gelöst ist, ist vorteilhafterweise derart entkuppelbar bzw. ausrastbar, dass die aus dem Stand der Technik bekannten unkomfortablen Schläge vermieden werden.

Dies wird dadurch erreicht, dass das Klinkenelement mit zwei starr miteinander verbundenen Hebelarmen ausgeführt ist, die einen gemeinsamen Drehpunkt aufweisen, wobei die Hebelarme jeweils mit einem Anlagebereich ausgebildet sind, über welche die Hebelarme mit der Kurvenscheibe in Kontakt stehen.

Das bedeutet, dass das mit dem Klinkenelement verbundene Sperrglied in Abhängigkeit einer Rotation der Kurvenscheibe in Eingriff mit der Rastscheibe oder aus dem Eingriff der Rastscheibe bringbar ist und die Bewegung des Klinkenelementes aufgrund der doppelten Anlage zwischen der Kurvenscheibe und dem Klinkenelement im Bereich der Anlagebereiche der Hebelarme derart exakt definiert ist, dass ein Abheben des Klinkenelementes von der Kurvenscheibe in den Anlagebereichen der Hebelarme auch nach dem Überwinden der aus der Reibkraft zwischen dem Sperrglied und der Rastscheibe resultierenden Haltekraft auf einfache Art und Weise vermieden ist.

Weitere Vorteile und vorteilhafte Ausgestaltungen des Gegenstandes gemäß der Erfindung ergeben sich aus den Patentansprüchen und dem unter Bezugnahme auf die Zeichnung prinzipmäßig beschriebenen Ausführungsbeispiel.

Es zeigt:
- Fig. 1: eine dreidimensionale Darstellung eines erfindungsgemäß ausgeführten Stabilisators für ein Kraftfahrzeug;
- Fig. 2: einen in Fig. 1 näher gekennzeichneten Bereich B2 in einer vergrößerten dreidimensionalen Teilschnittansicht;
- Fig. 3: einen in Fig. 2 näher gekennzeichneten Bereich B3 in einer dreidimensionalen Teilschnittansicht;
- Fig. 4: eine mit zwei Klinkenelementen zusammenwirkende Kurvenscheibe des Stabilisators gemäß Fig. 1;
- Fig. 5: eine dreidimensionale Einzeldarstellung der in Fig. 4 gezeigten Kurvenscheibe;
- Fig. 6: eine dreidimensionale Einzeldarstellung eines Klinkenelementes des Stabilisators;
- Fig. 7: eine dreidimensionale Einzeldarstellung einer mit einem Klinkenelement verbundenen Sperrglied zusammenwirkenden Rastscheibe des Stabilisators gemäß Fig. 1; und
- Fig. 8: eine vergrößerte Einzeldarstellung eines in Fig. 7 näher gekennzeichneten Bereiches B8.

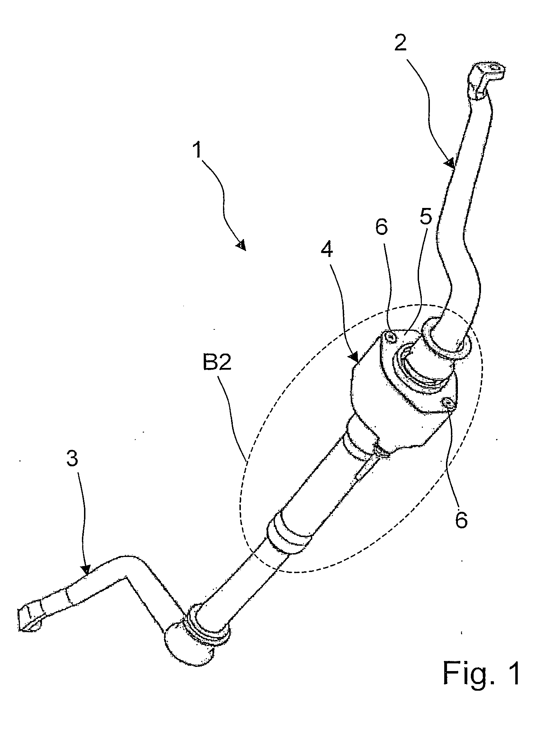

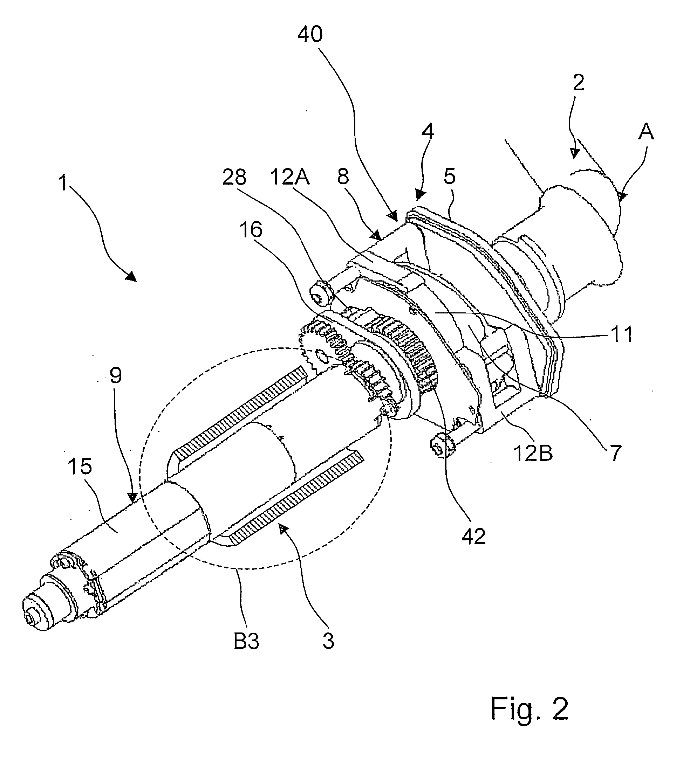

In Fig. 1 ist eine dreidimensionale Ansicht eines erfindungsgemäß ausgeführten Stabilisators 1 für ein Kraftfahrzeug gezeigt, der mit zwei in Einbaulage in Fahrzeugquerrichtung verlaufenden und über eine in Fig. 2 näher dargestellte mechanische Kupplung 40 miteinander koppelbaren Wellen 2, 3 ausgeführt ist. Die beiden Wellen 2, 3 bilden in geschlossenem bzw. gekuppeltem Zustand der in einem Gehäuse 4 angeordneten Kupplung 40 einen Torsionsfederstab aus und sind vorliegend mit ihren über die Kupplung 40 miteinander verbindbaren Enden in das Gehäuse 4 hineingeführt, wobei die zweite Welle 3 drehfest mit dem Gehäuse 4 verbunden ist. Das Gehäuse 4 ist mit einem Gehäusedeckel 5 über Schrauben 6 verschlossen, in dem die erste Welle 2 drehbar gelagert ist.

Die erste Welle 2 und die zweite Welle 3 sind über die mechanische Kupplung 40 auch derart voneinander trennbar, dass die erste Welle 2 gegenüber der zweiten Welle 3 innerhalb eines vordefinierten Winkelbereiches verdrehbar ist. Dieser Zustand der Kupplung 40 wird nachfolgend als entkuppelter bzw. geöffneter Zustand der Kupplung bezeichnet.

An ihren dem Gehäuse 4 abgewandten Enden stehen die Wellen 2, 3 in bekannter Art und Weise jeweils mit Reifen einer Fahrzeugachse des Fahrzeugs in Wirkverbindung, wobei eine Verschränkung der Fahrzeugachse bei geschlossener Kupplung durch den dann aktiven Stabilisator 1 stark beeinträchtigt ist. Der geschlossene Zustand des Stabilisators 1 wird bei einem Betrieb des Fahrzeugs auf normalen Straßen und bei höheren Geschwindigkeiten des Fahrzeugs aus Gründen der besseren Fahrstabilität bevorzugt.

Wird das Fahrzeug jedoch im Gelände betrieben, wird die Kupplung 40 zum Deaktivieren der an sich bekannten Wirkungsweise des Stabilisators 1 geöffnet, so dass eine Verschränkung der Fahrzeugachse in einem wesentlich größeren Umfang als bei aktiviertem Stabilisator 1 möglich ist, wodurch bei stark unebenem Untergrund des Fahrzeugs nach wie vor eine gute Traktion erreicht wird, da die beiden Reifen auch bei größeren Unebenheiten im Wesentlichen mit dem Untergrund in Kontakt bleiben.

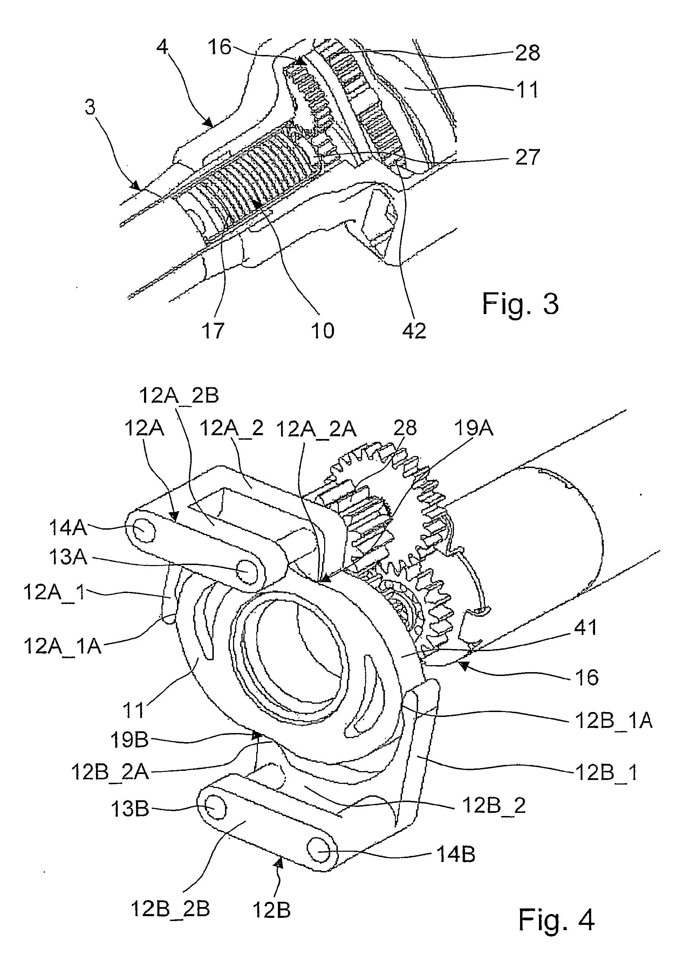

Um die vorbeschriebene Ansteuerung zum Aktivieren bzw. zum Deaktivieren des Stabilisators 1 durchführen zu können, ist die erste Welle 2 in der in der Fig. 2 dargestellten Art und Weise mit einer als Rastscheibe 7 ausgeführten ersten Kupplungshälfte und die zweite Welle 3 mit einer mit der Rastscheibe 7 zusammenwirkenden zweiten als Rastmittel 8 ausgeführten Kupplungshälfte der Kupplung 40 verbunden. Das Rastmittel 8 ist vorliegend mit zwei von einer Antriebsquelle 9 entgegen einer in Fig. 3 näher dargestellten Federeinrichtung 10 rotatorisch antreibbaren Kurvenscheibe 11 ansteuerbaren Klinkenelementen 12A und 12B und jeweils damit verbundenen und in Fig. 4 näher gezeigten Sperrgliedern 13A und 13B ausgeführt, wobei die Kurvenscheibe 11 an der Rastscheibe 7 drehbar gelagert ist.

Bei geschlossener Kupplung 40 ist zwischen der Rastscheibe 7 und den Sperrgliedern 13A und 13B jeweils eine kraftschlüssige Verbindung ausgebildet und die Wellen 2 und 3 sind in einer ersten dem geschlossenen Zustand der Kupplung 40 äquivalenten Endstellung der Kurvenscheibe 11 drehfest miteinander verbunden. Bei geöffneter Kupplung 40 ist die kraftschlüssige Verbindung zwischen den Sperrgliedern 13A und 13B und der Rastscheibe gelöst, wobei sich die Kurvenscheibe 11 in einer dem geöffneten Zustand der Kupplung 40 äquivalenten zweiten Endstellung befindet.

Die beiden fest mit dem Gehäuse 4 verbundenen Klinkenelemente 12A und 12B sind jeweils mit zwei starr miteinander verbundenen Hebelarmen 12A_1, 12A_2 und 12B_1,12B_2 ausgeführt, die jeweils einen gemeinsamen Drehpunkt 14A, 14B aufweisen. Darüber hinaus sind die Hebelarme 12A_1, 12A_2 und 12B_1,12B_2 jeweils mit einem Anlagebereich 12A_1A, 12A_2A bzw. 12B_1A, 12B_2A ausgebildet, in denen die Hebelarme 12A_1, 12A_2 bzw. 12B_1,12B_2 mit der Kurvenscheibe 11 jeweils gleichzeitig in Kontakt stehen, so dass eine Rotation der Kurvenscheibe 11 eine Verschwenkung der Klinkenelemente 12A und 12B um den jeweils korrespondierenden Drehpunkt 14A bzw. 14B bewirkt ohne das der doppelte Kontakt zwischen den Klinkenelementen 12A und 12B und der Kurvenscheibe 11 unterbrochen ist.

Die beiden Drehpunkte 14A und 14B der Klinkenelemente 12A und 12B sind vorliegend durch die Schrauben 6A und 6B, die zur Befestigung des Gehäusedeckels 5 am Gehäuse 4 vorgesehen sind, gebildet, so dass die Klinkenelemente 12A und 12B fest mit dem Gehäuse 4 und damit auch mit der zweiten Welle 3 verbunden sind.

Aus der in Fig. 2 gezeigten Darstellung ist ersichtlich, dass die zweite Welle 3 bereichsweise als Hohlwelle bzw. als Rohr ausgeführt ist, in dessen Innenraum die mit einem Elektromotor 15 ausgeführte Antriebsquelle 9 integriert ist, die mit der Kurvenscheibe 11 zum Antreiben der Kurvenscheibe 11 entgegen einer Federkraft der in Fig. 3 näher dargestellten und mit einer Schraubenfeder 17 ausgeführten Federeinrichtung 10 über eine vorliegend zweistufig ausgeführte Getriebeeinrichtung 16 wirkverbunden ist.

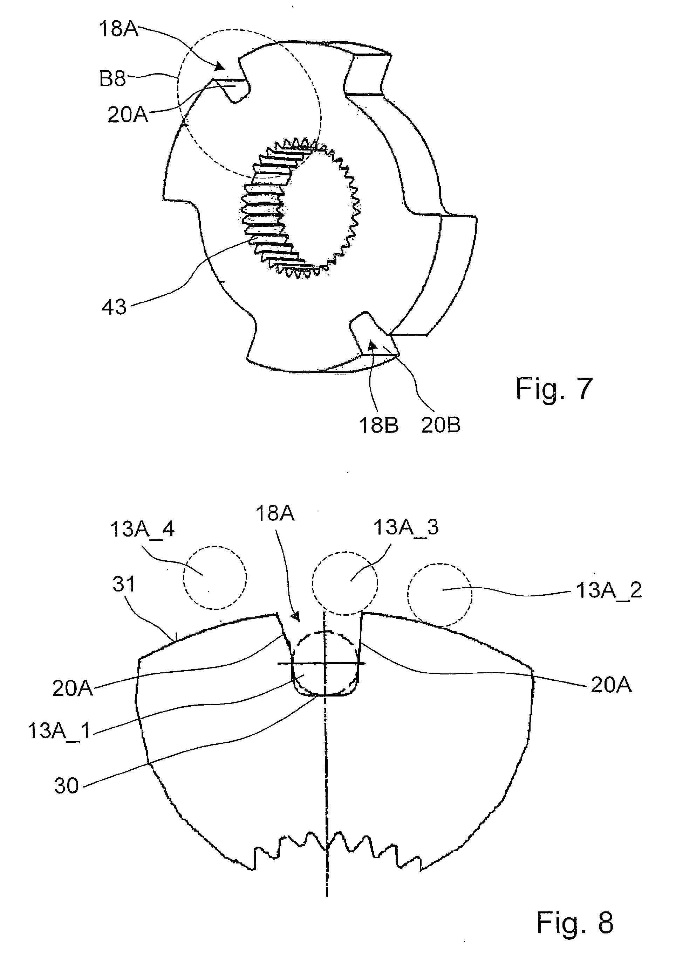

Dabei ist die Schraubenfeder 17 mit ihrem dem Elektromotor 15 zugewandten Ende gehäusefest ausgeführt und wird bei einer von dem Elektromotor 15 ausgehenden Drehbewegung, welche die Kurvenscheibe 11 aus der dem geschlossenem Zustand der Kupplung 40 des Stabilisators 1 äquivalenten ersten Endstellung in Richtung der dem geöffneten Zustand der Kupplung 40 äquivalenten zweiten Endstellung verstellt, zunehmend vorgespannt. Diese Vorspannung bewirkt, dass die Federeinrichtung 10 die Kurvenscheibe 11 ausgehend von der zweiten Endstellung in ihre erste Endstellung zurückverstellt, wenn der Elektromotor 15 unbestromt ist und die Sperrglieder 13A und 13B der beiden Klinkenelemente 12A und 12B mit damit korrespondierenden und in Fig. 7 näher dargestellten Arretiertrichtern 18A, 18B der Rastscheibe 7 derart in Deckung sind, so dass die Sperrglieder 13A und 13B in die Arretiertrichter 18A und 18B einrastbar sind bzw. mit der Rastscheibe 7 in Eingriff bringbar sind.

An ihrem dem Elektromotor 15 abgewandten Ende ist die Schraubenfeder 17 der Federeinrichtung 10 mit einer Motorausgangswelle 27 des Elektromotors 15 verbunden, wobei die Motorausgangswelle 27 in nicht näher dargestellter Art und Weise mit dem Rotor des Elektromotors 15 wirkverbunden ist, so dass über die zweistufige Getriebeeinheit 16 die in Schließrichtung der Kupplung 40 wirkende Federkraft der Federeinrichtung 10 auf die Kurvenscheibe 11 aufbringbar ist. Die Kurvenscheibe 11 ist auf ihrer der Getriebeeinheit 16 zugewandten Seite mit einem Zahnrad 42 ausgeführt, welches einen Teil der Getriebeeinheit 16 darstellt und mit einem weiteren Zahnrad 28 der Getriebeeinheit 16 kämmt.

Die zweistufige Getriebeeinheit 16 dient einerseits der Momentenerhöhung des Antriebsmomentes des Elektromotors 15 und zum anderen zu einer Überbrückung eines eventuell zwischen dem Elektromotor 15 und der Kurvenscheibe 11 vorliegenden Mittenversatzes im Bereich zwischen der Drehachse der Motorausgangswelle 27 und der Kurvenscheibe 11.

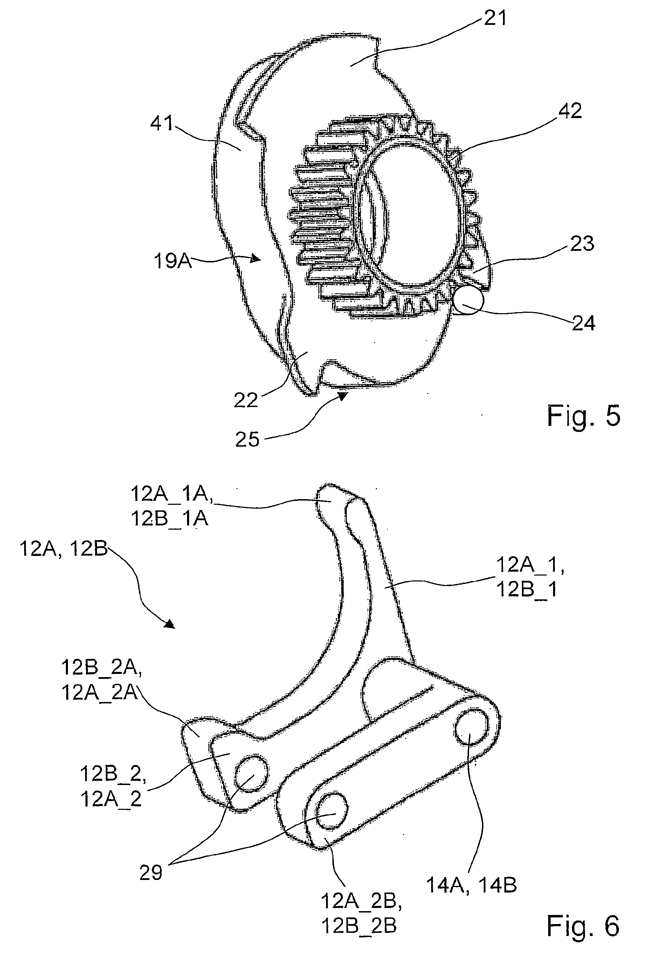

In Fig. 4 sind die beiden Klinkenelemente 12A und 12B sowie die Kurvenscheibe 11 in einer dreidimensionalen Darstellung aus der durch den in Fig. 2 dargestellten Pfeil A näher gekennzeichneten Ansicht gezeigt. Des Weiteren sind die Kurvenscheibe 11 sowie eines der beiden im Wesentlichen identisch ausgebildeten Klinkenelemente 12A und 12B in Fig. 5 bzw. Fig. 6 jeweils in Alleinstellung gezeigt.

Aus der Darstellung der Kurvenscheibe 11 gemäß Fig. 4 und Fig. 5 geht hervor, dass die Kurvenscheibe 11 im Wesentlichen elliptisch ausgeführt ist und im Bereich ihrer kleinen Halbachsen beidseitig jeweils mit einer Einschnürung 19A bzw. 19B ausgebildet ist. Die Kurvenscheibe 11 stellt mit ihrem entarteten elliptischen Umriss eine Steuerbahn 41 für die beiden Klinkenelemente 12A und 12B dar, welche in der in Fig. 4 dargestellten Art und Weise mit ihren Hebelarmen 12A_1,12A_2 bzw. 12B_1 und 12B_2 an ihren der Steuerbahn 41 zugewandten Seiten mit den konvex ausgeführten Anlagebereichen 12A_1A, 12A_2A bzw. 12B_1A und 12B_2A spielfrei anliegen, so dass die Klinkenelemente 12A und 12B bei Überfahren der über den Umfang der Kurvenscheibe 11 mit unterschiedlichen Krümmungsradien ausgeführten Steuerbahn 41 der Kurvenscheibe 11 jeweils in exakt vordefinierter Art und Weise um ihre Drehpunkte 14A und 14B verschwenkt werden.

Dabei bewirken die beiden Einschnürungen 19A und 19B, dass bei einer Rotation der Kurvenscheibe 11 ausgehend von ihrer ersten dem geschlossenen Zustand der Kupplung 40 äquivalenten Endstellung, bei der die Sperrglieder 13A und 13B in Eingriff mit der Rastscheibe 7 stehen, die Sperrglieder 13A und 13B bezogen auf die Rastscheibe 7 zunächst im Wesentlichen radial nach außen, d. h. senkrecht zu der Drehachse der Kurvenscheibe 11, aus dem Eingriff der Rastscheibe 7 geführt werden, wobei die Sperrglieder 13A und 13B eine Kurvenbahn mit einem großen Kurvenradius beschreiben.

Damit wird gewährleistet, dass Flanken 20A, 20B der Arretiertrichter 18A und 18B mit derart steilen Einfallswinkeln ausführbar sind, dass die in geschlossenem Zustand der Kupplung 40 vorliegende kraftschlüssige Verbindung zwischen den Sperrgliedern 13A und 13B und der Rastscheibe 7 eine große Sperrwirkung zwischen den beiden Wellen 2 und 3 des Stabilisators 1 zur Verfügung stellt.

Des Weiteren ist die Kurvenscheibe 11 mit drei sich in Umfangsrichtung abschnittsweise erstreckenden kragenartigen Bereichen 21, 22 und 23 ausgeführt, wobei die beiden kragenartigen Bereiche 22 und 23 als Anschläge für einen gehäusefesten Bolzen 24 vorgesehen sind. Zwischen den beiden kragenartigen Bereichen 22 und 23 ist eine über ein vordefiniertes Winkelsegment verlaufende Steuernut 25 ausgebildet, in die der gehäusefeste Bolzen 24 derart eingreift, dass sich die Kurvenscheibe 11 bei Anlage des Bolzens 24 an einem der kragenartigen Bereiche bzw. Anschläge 22 oder 23 in einer der vorbeschriebenen Endstellungen befindet und nicht mehr weiter in die von dem jeweiligen kragenartigen Bereich 22 oder 23 gesperrte Richtung verdrehbar ist.

Der kragenartige Bereich 21 hingegen ist vorliegend Bestandteil einer Anzeigeeinrichtung, der mit auf einer in Fig. 2 näher dargestellten Platine 26 angeordneten Positionserkennungssensoren der Anzeigeeinrichtung derart zusammenwirkt, dass eine aktuelle Position der Kurvenscheibe 11 mittels der Positionserkennungssensoren, die vorliegend vorzugsweise als Hallsensoren ausgebildet sind, ermittelbar ist. Die beiden Hallsensoren sind in nicht näher dargestellter Art und Weise in Drehrichtung der Kurvenscheibe 11 derart nebeneinander positioniert, dass die Bewegung und die aktuelle Position der Kurvenscheibe 11 über beispielsweise im kragenartigen Bereich 21 angeordnete Einfräsungen auf einfache Art und Weise ermittelbar ist.

Fig. 6 zeigt exemplarisch eines der identisch ausgeführten Klinkenelemente 12A bzw. 12B. Aus dieser vergrößerten Einzeldarstellung des Klinkenelementes 12A bzw. 12B geht hervor, dass die konvex ausgeführten Anlagebereiche 12A_1A, 12A_2A, 12B_1A, 12B_2A der Hebelarme 12A_1, 12A_2,12B_1, 12B_2 über die Breite der Hebelarme 12A_1 und 12A_2 derart eben ausgeführt sind, dass zwischen der Steuerbahn 41 der Kurvenscheibe 11 und den Klinkenelementen 12A bzw. 12B in den Anlagenbereichen 12A_1A, 12A_2A, 12B_1A, 12B_2A eine Linienberührung vorliegt. Damit wird gewährleistet, dass einerseits eine während der Drehbewegung der Kurvenscheibe 11 zwischen der Steuerbahn 41 und den Anlagebereichen 12A_1A, 12A_2A bzw. 12B_1A, 12B_2A auftretende und der Drehbewegung der Kurvenscheibe 41 entgegenstehende Reibungskraft gering ist und andererseits eine Kippbewegung der Klinkenelemente 12A bzw. 12B, die durch die von der Steuerbahn 41 der Kurvenscheibe 11 auf die Klinkenelemente 12A und 12B einwirkende Steuerkraft und über die Sperrglieder 13A und 13B jeweils in die Klinkenelemente 12A und 12B eingeleiteten Momente, die durch den Eingriff der Sperrelemente 13A und 13B in die Rastscheibe 7 auftreten, reduziert ist.

Zusätzlich sind die Klinkenelemente 12A bzw. 12B gemäß der in Fig. 6 gezeigten Darstellung jeweils mit parallel zu den Hebelarmen 12A_2 und 12B_2 verlaufenden Hebelteilarmen 12A_2B, 12B_2B ausgeführt, die mit den Hebelarmen 12A_2 und 12B_2 jeweils eine Aufnahme 29 für die Sperrglieder 13A und 13B ausbilden und die im Bereich der Aufnahme 29 beabstandet zu den Hebelarmen 12A_2 und 12B_2 angeordnet sind. Damit wird einer in radialer Richtung bzw. senkrecht zu der Mittelachse der Rastscheibe 7 auf das Sperrglied 13A einwirkenden Kraft besser entgegengewirkt, da die an den Sperrgliedern 13A und 13B angreifenden Kräfte über die verbreiterte Aufnahme 29 besser abgestützt werden und über das Klinkenelement 12A bzw. 12B in das Gehäuse 4 des Stabilisators 1 eingeleitet werden können.

Selbstverständlich liegt es hierbei im Ermessen des Fachmanns in Abhängigkeit des jeweils vorliegenden Anwendungsfalls den zwischen dem Hebelarm 12A_2 bzw. 12B_2 und dem Hebelteilarm 12A_2B bzw. 12B_2B vorliegenden Spalt mit Werkstoff zu befüllen, wobei die in Fig. 6 dargestellte Ausführungsform des Klinkenelementes 12A bzw. 12B aufgrund des reduzierten Werkstoffeinsatzes durch ein geringeres Bauteilgewicht gekennzeichnet ist.

Fig. 7 zeigt die Rastscheibe 7, die über eine Kerbverzahnung 43 mit der ersten Welle 2 drehfest verbunden ist, in vergrößerter Einzeldarstellung, wobei in Fig. 8 wiederum der in Fig. 7 näher gekennzeichnete Bereich B8 in vergrößerter Einzeldarstellung gezeigt ist. Das Sperrglied 13A ist in Fig. 8 in Bezug auf die Rastscheibe 7 in vier verschiedenen Positionen dargestellt, wobei die vier verschiedenen Positionen des Sperrgliedes 13A unter den Bezugszeichen 13A_1, 13A_2,13A_3 und 13A_4 näher gezeigt sind.

Die Kupplung 40 ist bei der unter 13A_1 dargestellten Position des Sperrgliedes 13A geschlossen, da sich das Sperrglied 13A in dieser Stellung vollständig in dem Arretiertrichter 18A befindet und an den Flanken 20A sowie an einer unteren Begrenzungsfläche 30 des Arretiertrichters 18A spielfrei anliegt. Das bedeutet, dass eine Wirkungsweise des Stabilisators 1 bei geschlossener Kupplung 40 lediglich durch die Bauteilelastizitäten der verschiedenen Baugruppen des Stabilisators 1 charakterisiert ist und eine undefinierte Wirkungsweise des Stabilisators 1 durch ein unerwünschtes Spiel im Anlagebereich zwischen den Sperrgliedern 13A und 13B und der Rastscheibe 7 weitestgehend vermieden ist.

Bei der unter dem Bezugszeichen 13A_4 dargestellten Position des Sperrgliedes 13A ist die Kupplung 40 zwischen den beiden Wellen 2 und 3 vollständig geöffnet und die Wellen 2 und 3 sind gegeneinander verdreht. Der vollständig geöffnete bzw. entkoppelte Zustand des Stabilisators 1 ist vorliegend durch den zwischen der Außenseite 31 der Rastscheibe 7 und dem Sperrglied 13A vorliegenden Abstand gekennzeichnet, bei dem das Sperrglied 13A von dem Klinkenelement 12A vollständig aus dem Wirkbereich der Rastscheibe 7 verschwenkt ist.

In der unter dem Bezugszeichen 13A_2 näher dargestellten Position des Sperrgliedes 13A befindet sich die Kupplung 40 in einem so genannten vorbereitend gekuppelten Zustand bzw. vorbereitend geschlossenen Zustand. In diesem Fall ist das Sperrglied 13A von dem Klinkenelement 12A nicht mehr in der unter dem Bezugszeichen 13A_4 dargestellten Position beabstandet zu der Oberfläche 31 der Rastscheibe 7 gehalten, sondern liegt spielfrei auf der Außenseite 31 der Rastscheibe 7 an. Dieser Zustand der Kupplung 40 und des Sperrgliedes 13A liegt dann vor, wenn die beiden Wellen 2, 3 gegeneinander verdreht sind. Von dem Elektromotor 15 wird in diesem Betriebszustand des Stabilisators 1 keine das Sperrglied 13A in seine dem geöffneten Zustand der Kupplung äquivalente Position 13A_1 bringende bzw. wirkende Stellkraft aufgebracht.

Wird die Verschränkung des Stabilisators 1 durch einen entsprechend ebenen Untergrund des Fahrzeuges verringert, so dass das Sperrglied 13A beispielsweise in die unter 13A_3 dargestellte Position gebracht wird, ist die Kurvenscheibe 11 von der Federeinrichtung 10 in Richtung seiner dem geschlossenen Zustand der Kupplung 40 äquivalenten Endstellung verdrehbar, bis auch das Sperrglied 13A radial in Richtung der Mittelachse der Rastscheibe 7 verstellt wird. Da die beiden Wellen 2 und 3 bei der unter 13A_2 dargestellten Position des Sperrgliedes 13A derart zueinander verdreht sind, dass der Arretiertrichter 18A mit dem Sperrglied 13A nicht in Deckung ist, kann die Kupplung 40 erst dann in ihren geschlossenen Zustand überführt werden, wenn das Sperrglied 13A durch eine Verdrehung der beiden Wellen 2 und 3 zumindest teilweise mit dem Arretiertrichter 18A der Rastscheibe 7 in der unter 13A_3 dargestellten Art und Weise in Deckung kommt.

Das bedeutet, dass eine Verdrehung zwischen den beiden Wellen 2 und 3, die zum endgültigen Schließen der Kupplung 40 und somit zum Arretieren des Stabilisators 1 erforderlich ist, bei entsprechend dimensionierter Schraubenfeder 17 allein durch die Federkraft der Federeinrichtung 10 bewerkstelligt werden kann.

Falls die Federkraft der Federeinrichtung 10 alleine nicht ausreichend groß genug ist, um die Kupplung 40 ausgehend von der unter dem Bezugszeichen 13A_3 gezeigten Position des Sperrgliedes 13A zu schließen, kann es vorgesehen sein, dass die zusätzliche Ansteuerkraft über den Elektromotor 15 aufgebracht wird.

Der in Fig. 1 dargestellte Stabilisator 1 ist vorliegend als ein elektromechanisches System ausgeführt, bei dem der Elektromotor 15 die Kurvenscheibe 11 gegen die mit der Schrauben- bzw. Spiralfeder 17 ausgeführte Federeinrichtung 10 um vorzugsweise 120° gegen die von den kragenartigen Bereichen 22 und 23 jeweils ausgeführten Anschläge dreht. Über die Kurvenscheibe 11 werden die beiden Klinkenelemente 12A und 12B mit ihren Sperrgliedern 13A und 13B aus den Arretiertrichtern 18A und 18B der Rastscheibe 7 bewegt, wobei sich die Sperrglieder 13A und 13B bei unbetätigtem System in den Arretiertrichtern 18A und 18B der Rastscheibe 7 befinden.

Ist die Kurvenscheibe 11 aus ihrer ersten Endstellung, bei welcher der Stabilisator 1 gekoppelt ist, in ihre zweite Endstellung, bei der die Sperrglieder 13A und 13B von den Klinkenelementen 12A und 12B aus den Arretiertrichtern 18A und 18B der Rastscheibe 7 gehoben sind, verstellt, ist der Stabilisator 1 entkoppelt und die Stabilisatorwirkung, die eine Verschränkung der Fahrzeugachse behindert, aufgehoben. In diesem Zustand der Kupplung 40 wird der Elektromotor 15 weiter bestromt, um den Stabilisator 1 in seinem entkoppelten Zustand zu halten und um der in Schließrichtung der Kupplung 40 wirkenden Federkraft der Federeinrichtung 10 erfolgreich entgegenwirken zu können.

Die vorbeschriebene Ausgestaltung des elektromechanischen Systems bzw. des Stabilisators 1 stellt einen derartigen Fail-Safe-Mechanismus dar, dass die als Rückstellfedereinheit wirkende Federeinrichtung 10 die Kurvenscheibe 11 bei Ausfall der Stromversorgung ausgehend von ihrer dem geöffneten Zustand der Kupplung 40 äquivalenten Endstellung in ihre dem geschlossenen Zustand der Kupplung äquivalente Endstellung verdreht. Dann werden die Sperrglieder 13A und 13B bei Vorliegen der vorbeschriebenen zumindest teilweisen Überdeckung mit den Arretiertrichtern wieder in die Arretiertrichter 18A und 18B der Rastscheibe 7 gedrückt, so dass der Stabilisator 1 wieder gekoppelt ist und die Stabilisatorwirkung wieder hergestellt ist.

Bei verschränkten Achsen bzw. bei tordiertem Stabilisator 1, bei dem die vorbeschriebene zumindest teilweise Überdeckung zwischen den Sperrgliedern 13A und 13B und den Arretiertrichtern 18A und 18B nicht gegeben ist, können die Sperrglieder 13A und 13B von der Federeinrichtung 10 nicht in die Arretiertrichter 18A und 18B der Rastscheibe 7 gedrückt werden, da die beiden Wellen 2 und 3 dann in Bezug auf eine Nulllage, in der der Stabilisator 1 arretiert ist, derart zueinander verdreht sind, dass zum Schließen der Kupplung ein zu großer Winkelversatz zwischen den Arretiertrichtern 18A und 18B und den Sperrgliedern 13A und 13B vorliegt.

Zum Schließen der Kupplung 40 ist die Nulllage, bei der im Wesentlichen keine einseitige Einfederung bei der mit dem Stabilisator 1 ausgeführten Fahrzeugachse vorliegt, erforderlich, damit die Federeinrichtung 17 vorzugsweise zusammen mit dem Elektromotor 15 die Sperrglieder 13A und 13B mit Hilfe der Kurvenscheibe 11 wieder in die Arretiertrichter 18A und 18B der Rastscheibe 7 drücken kann.

In geöffnetem Zustand der Kupplung 40 wird eine vorliegend als elektrische Reibbremse ausgeführte Halteeinrichtung 32 aktiviert, mittels der die Kurvenscheibe 11 in ihrer dem geöffneten Zustand des Stabilisators 1 äquivalenten Endstellung gehalten wird. Damit besteht vorteilhafterweise die Möglichkeit, die zum Halten der Kurvenscheibe 11 in der dem geöffneten Zustand des Stabilisators 1 äquivalenten Endstellung erforderliche Bestromung des Elektromotors 15 derart abzusenken, dass der Elektromotor 15 nicht überhitzt. Damit dient die Halteeinrichtung 32, welche vorliegend eine Wirkverbindung zwischen der Motorausgangswelle 27 bzw. dem Rotor des Elektromotors 15 und der zweiten Welle 3 herstellt und selbstverständlich abweichend von der vorgeschlagenen Ausführung als elektrische Reibbremse auch in jeder anderen geeigneten Art und Weise ausgebildet sein kann, als Absicherung des Elektromotors 15 gegen eine eventuelle thermische Überbeanspruchung. Dabei kann der Stabilisator auch ohne die Halteeinrichtung ausgeführt sein, wenn eine Überlastung des Elektromotors über den gesamten Betriebsbereich des Stabilisators nicht gegeben ist.

Liegt eine fahrerseitige Wunschvorgabe zum Schließen des Stabilisators 1, beispielsweise durch Betätigen eines im Fahrgastraum angeordneten Schalters, vor, wird der Elektromotor 15 und gegebenenfalls die Haltevorrichtung 32 mit Hilfe der auf der Platine 26 angeordneten Leistungssteuerung derart deaktiviert, dass die Federeinrichtung 10 sowohl den Elektromotor 15 als auch die Kurvenscheibe 11 ausgehend von der dem geöffneten Zustand des Stabilisators 1 äquivalenten Position zurück bis in die dem geschlossenen Zustand des Stabilisators äquivalente Position zurückdreht und die Sperrglieder 13A und 13B wieder in die Arretiertrichter 18A und 18B der Rastscheibe 7 gedrückt werden.

Bei Vorliegen einer Verschränkung der mit dem Stabilisator 1 ausgeführten Fahrzeugachse, bei der die beiden Wellen 2 und 3 gegeneinander verdreht sind und die durch einen derartigen Winkelversatz zwischen den Sperrgliedern 13A und 13B und den Arretiertrichtern 18A und 18B der Rastscheibe 7 gekennzeichnet ist, dass die Sperrglieder 13A und 13B nicht in die Arretiertrichter 18A und 18B in die unter dem Bezugszeichen 13A_1 in Fig. 8 dargestellte Position verbracht werden können, wird das elektromechanische System bzw. der Stabilisator 1 in der vorbeschriebenen Art und Weise zunächst lediglich in einen teilaktiven Zustand, d. h. den vorbereitend geschlossenen Zustand, verbracht.

In dem letztgenannten Betriebszustand des Stabilisators 1, in dem der Stabilisator 1 nicht aktiviert werden kann, detektiert eine ebenfalls auf der Platine 26 angeordnete Sensorik in Abhängigkeit der ermittelten Stellung der Kurvenscheibe 11 die aktuelle Position der Motorausgangswelle 27 des Elektromotors 15 und deaktiviert diesen. Wird die Verschränkung der Fahrzeugachse derart verringert, dass zwischen den beiden Wellen 2 und 3 bzw. zwischen dem Sperrglied 13A bzw. 13B und dem Arretiertrichter 18A bzw. 18B nur noch ein Winkelversatz von bis zu maximal 1,25° vorliegt, werden die Sperrglieder 13A und 13B über die Federeinrichtung 17 und eventuell unter Zuhilfenahme des dann wieder aktivierten bzw. bestromten Elektromotors 15 in die Arretiertrichter 18A und 18B der Rastscheibe 7 gedrückt, so dass die Kupplung 40 geschlossen ist und der Stabilisator 1 wieder aktiviert ist.

Bei größeren Verdrehwinkeln zwischen den beiden Wellen 2 und 3 können die Sperrglieder 13A und 13B der Klinkenelemente 12A und 12B nicht in die Arretiertrichter 18A und 18B der Rastscheibe 7 gedrückt werden, wobei vorliegend von Verdrehwinkeln zwischen den Wellen 2 und 3 oder zwischen den Arretiertrichtern 18A und 18B und den Sperrgliedern 13A und 13B ausgegangen wird, die größer als 1,25° sind. In diesem Fall liegen die Sperrglieder 13A und 13B in der unter dem Bezugszeichen 13A_2 in Fig. 8 dargestellten Art und Weise auf der Rastscheibe 7 auf.

In diesem Zusammenhang wird darauf hingewiesen, dass der Grenzwinkel des maximalen Verdrehwinkels zwischen den beiden Wellen 2 und 3, bis zu dem die Sperrglieder jeweils in die damit korrespondierenden Arretiertrichter in der vorbeschriebenen Art und Weise gedrückt werden können, in Abhängigkeit eines Öffnungswinkels des jeweils betreffenden Arretiertrichters und einem aus der Materialpaarung der Sperrglieder und der Rastscheibe resultierenden Reibwertfaktor stehen, so dass der vorgenannte Grenzwinkel in Abhängigkeit des jeweils vorliegenden Anwendungsfalls selbstverständlich von dem vorgenannten Winkelwert von 1,25° abweichen kann.

Die auf der Platine 26 angeordnete Leistungselektronik zur Steuerung des Stabilisators 1 ist vorliegend mit elektronischen Verstärkungselementen ausgeführt, mittels welchen die Signale der Hallsensoren verstärkt werden. Des Weiteren ist die Leistungselektronik der Platine 26 mit einem nicht näher dargestellten separaten Steuergerät ausgeführt, welches mit einem CAN-Bus des Kraftfahrzeuges verbunden ist. Über den CAN-Bus wird das Steuergerät mit einer Information über die aktuelle Geschwindigkeit des Fahrzeuges beaufschlagt. Wird ein vordefinierter kritischer Grenzgeschwindigkeitswert überschritten, wird der geöffnete Stabilisator 1 durch Schließen der Kupplung 40 verrastet, so dass die für die aktuell ermittelte Geschwindigkeit erforderliche Stabilisation des Kraftfahrzeuges durch den geschlossenen Stabilisator 1 zur Verfügung steht.

Abschließend wird darauf hingewiesen, dass es im Ermessen des Fachmannes liegt, den Stabilisator nach der Erfindung lediglich mit einem Klinkenelement oder mit mehr als zwei Klinkenelementen auszuführen, wobei die jeweils ausgewählte Anzahl an Klinkenelementen keine Veränderung der Wirkungsweise des in der Zeichnung dargestellten und in der vorstehenden Beschreibung näher erläuterten Ausführungsbeispiels des Stabilisators 1 zur Folge hat.

### Bezugszeichen

- 1: Stabilisator
- 2: erste Welle
- 3: zweite Welle
- 4: Gehäuse
- 5: Gehäusedeckel
- 6A, B: Schrauben
- 7: Rastscheibe
- 8: Rastmittel
- 9: Antriebsquelle
- 10: Federeinrichtung
- 11: Kurvenscheibe
- 12A, B: Klinkenelement
- 12A_1,12A_2: Hebelarm
- 12B_1, 12B_2: Hebelarm
- 12A_1A, 12A_2A, 12B_1A, 12B_2A: Anlagebereich
- 12A_2B, 12B_2B: Hebelteilarm
- 13A, B: Sperrglied
- 13A_1, 13A_2, 13A_3, 13A_4: Position des Sperrgliedes
- 14A, B: Drehpunkt
- 15: Elektromotor, Antriebsquelle
- 16: Getriebeeinheit
- 17: Federeinrichtung
- 18A, B: Arretiertrichter
- 19A, B: Einschnürungen
- 20A, B: Flanken
- 21, 22, 23: kragenartiger Bereich
- 24: Bolzen
- 25: Steuernut
- 26: Platine
- 27: Motorausgangswelle
- 28: weiteres Zahnrad
- 29: Aufnahme
- 31: Außenseite der Rastscheibe
- 32: Halteeinrichtung
- 40: Kupplung
- 41: Steuerbahn
- 42: Zahnrad
- 43: Kerbverzahnung

## Patentansprüche

1. Stabilisator (1) für ein Kraftfahrzeug mit zwei in Fahrzeugquerrichtung verlaufenden und über eine mechanische Kupplung (40) miteinander koppelbaren Wellen (2, 3), die jeweils mit ihren der Kupplung (40) abgewandten Enden mit Reifen des Kraftfahrzeugs in Wirkverbindung stehen, wobei eine erste Welle (2) mit einer als Rastscheibe (7) ausgeführten ersten Kupplungshälfte und eine zweite Welle (3) mit einer mit der Rastscheibe (7) zusammenwirkenden zweiten als Rastmittel (8) ausgeführten Kupplungshälfte verbunden ist, wobei das Rastmittel (8) ein von einer Antriebsquelle (9) entgegen einer Federeinrichtung (10) rotatorisch antreibbaren Kurvenscheibe (11) ansteuerbares Klinkenelement (12A, 12B) und ein damit verbundenes Sperrglied (13A, 13B) aufweist, über welches die Wellen (2, 3) in einer ersten Endstellung der Kurvenscheibe (11) aufgrund einer kraftschlüssigen Verbindung zwischen der Rastscheibe (7) und dem Sperrglied (13A, 13B) drehfest verbunden sind und die kraftschlüssige Verbindung in einer zweiten Endstellung der Kurvenscheibe (11) gelöst ist, **dadurch gekennzeichnet, dass** das Klinkenelement (12A, 12B) mit zwei starr miteinander verbundenen Hebelarmen (12A_1, 12A_2, 12B_1, 12B_2) ausgeführt ist, die einen gemeinsamen Drehpunkt (14A, 14B) aufweisen, wobei die Hebelarme (12A_1 bis 12B_2) jeweils mit einem Anlagebereich (12A_1A, 12A_2A, 12B_1A, 12B_2A) ausgebildet sind, über welche die Hebelarme (12A, 12B) mit der Kurvenscheibe (11) in Kontakt stehen.

2. Stabilisator nach Anspruch 1, **dadurch gekennzeichnet, dass** die Anlagebereiche (12A_1A bis 12B_2A) der Hebelarme (12A_1 bis 12B_2) derart gewölbt ausgeführt sind, dass zwischen den Hebelarmen (12A_1 bis 12B_2) und der Kurvenscheibe (11) wenigstens annähernd eine Linienberührung vorliegt.

3. Stabilisator nach Anspruch 1 oder 2, **dadurch gekennzeichnet, dass** das Sperrglied (13A, 13B) als ein mit einem der Hebelarme (12A_1, 12B_1) fest verbundener Bolzen ausgebildet ist.

4. Stabilisator nach einem der Ansprüche 1 bis 3, **dadurch gekennzeichnet, dass** die Rastscheibe (7) über eine Kerbverzahnung (43) mit der ersten Welle (2) verbunden ist.

5. Stabilisator nach einem der Ansprüche 1 bis 4, **dadurch gekennzeichnet, dass** die Rastscheibe (7) mit einem Arretiertrichter (18A, 18B) ausgeführt ist, in dem das Sperrglied (13A, 13B) in geschlossenem Zustand der Kupplung (40) vorzugsweise spielfrei angeordnet ist.

6. Stabilisator nach Anspruch 5, **dadurch gekennzeichnet, dass** der Arretiertrichter (18A, 18B) derart ausgeführt ist, dass die Kupplung (40) bei Vorliegen eines Versatzwinkels zwischen den Wellen (2, 3), der kleiner als ein in Abhängigkeit eines Öffnungswinkels des Arretiertrichters (18A, 18B) stehender Grenzwinkel ist, der vorzugsweise 1,25° ist, über die Federeinrichtung (10) schließbar ist.

7. Stabilisator nach einem der Ansprüche 1 bis 6, **dadurch gekennzeichnet, dass** die Kurvenscheibe (11) an der Rastscheibe (7) drehbar gelagert ist sowie mit der Antriebsquelle (9) und der Federeinrichtung (10) über eine Getriebeeinheit (16) verbunden ist.

8. Stabilisator nach einem der Ansprüche 5 bis 7, **dadurch gekennzeichnet, dass** die Kurvenscheibe (11) mit einer elliptischen Steuerbahn (41) ausgeführt ist, die im Bereich der kleinen Halbachsen mit derartigen Einschnürungen (19A, 19B) ausgeführt ist und auf der die Hebelarme (12A_1 bis 12B_2) mit ihren Anlagebereichen (12A_1A bis 12B_2A) derart geführt sind, dass das Sperrglied (13A, 13B) bei einer Drehbewegung der Kurvenscheibe (11) ausgehend von einer dem geschlossenen Zustand der Kupplung (40) äquivalenten Position in Bezug auf die Rastscheibe (7) im Wesentlichen radial nach außen bewegt und dabei aus dem Arretiertrichter (18A, 18B) der Rastscheibe (7) geführt wird.

9. Stabilisator nach einem der Ansprüche 1 bis 8, **dadurch gekennzeichnet, dass** die Kurvenscheibe (11) an ihrem Umfang mit mehreren sich in Umfangsrichtung abschnittsweise erstreckenden kragenartigen Bereichen (21, 22, 23) ausgeführt ist, wobei zwei kragenartige Bereiche (22, 23) als Anschläge für einen gehäusefesten Bolzen (24) vorgesehen sind, und wobei zwischen den beiden Anschlägen (22, 23) eine über ein bestimmtes Winkelsegment verlaufende Steuernut (25) ausgebildet ist, in die der Bolzen (24) derart eingreift, dass sich die Kurvenscheibe (11) bei Anlage des Bolzens (24) an einem der Anschläge (22 oder 23) in einer der Endstellungen befindet.

10. Stabilisator nach einem der Ansprüche 1 bis 9, **dadurch gekennzeichnet, dass** die Kurvenscheibe (11) mit einer Anzeigeeinrichtung ausgebildet ist, die mit Positionserkennungssensoren derart zusammenwirkt, dass eine aktuelle Position der Kurvenscheibe (11) mittels der Positionserkennungssensoren ermittelbar ist.

11. Stabilisator nach Anspruch 10, **dadurch gekennzeichnet, dass** die Positionserkennungssensoren als Hallsensoren ausgebildet sind.

12. Stabilisator nach einem der Ansprüche 1 bis 11, **dadurch gekennzeichnet, dass** die Antriebsquelle (9) und die Federeinrichtung (10) in der wenigstens bereichsweise als Hohlwelle ausgebildeten zweiten Welle (3) angeordnet sind.

13. Stabilisator nach einem der Ansprüche 1 bis 12, **dadurch gekennzeichnet, dass** die Federeinrichtung (10) mit einer in Einbaulage derart vorgespannten Schraubenfeder (17) ausgeführt ist, die die Kurvenscheibe (11) in eine die Kupplung (40) schließende Richtung ansteuert.

14. Stabilisator nach einem der Ansprüche 1 bis 13, **dadurch gekennzeichnet, dass** die Antriebsquelle (9) mit einem Elektromotor (15) ausgebildet ist.

15. Stabilisator nach einem der Ansprüche 1 bis 14, **dadurch gekennzeichnet, dass** der mit dem Sperrglied (13A, 13B) verbundene Hebelarm (12A_1, 12B_1) des Klinkenelements (12A, 12B) einen parallel dazu verlaufenden Hebelteilarm (12A_2B, 12B_2B) aufweist.

16. Stabilisator nach einem der Ansprüche 1 bis 15, **dadurch gekennzeichnet, dass** die Wirkverbindung zwischen der Kurvenscheibe (11) und der Federeinrichtung (10) mit einer derartigen Halteeinrichtung (32) ausgeführt ist, dass die Kurvenscheibe (11) entgegen der Federkraft der Federeinrichtung (10) in der aktuellen Position haltbar ist.

17. Stabilisator nach Anspruch 16, **dadurch gekennzeichnet, dass** die Halteeinrichtung (32) als eine am Rotor des Elektromotors (15) angreifende Bremse ausgeführt ist.

18. Stabilisator nach einem der Ansprüche 10 bis 17, **dadurch gekennzeichnet, dass** die Positionserkennungssensoren auf einer Platine (26) angeordnet sind, auf der weitere elektronische Bauteile zur Verstärkung der Signale der Positionserkennungssensoren angeordnet sind.

19. Stabilisator nach einem der Ansprüche 10 bis 18, **dadurch gekennzeichnet, dass** die Platine (26) mit einem Steuergerät ausgeführt, dass mit einem CAN-Bus des Kraftfahrzeugs verbunden ist, so dass die Kupplung (40) bei Überschreiten einer kritischen Fahrzeuggeschwindigkeit in Abhängigkeit einer steuergeräteseitigen Ansteuerung geschlossen wird.

## Claims

1. Stabilizer (1) for a motor vehicle comprising two shafts (2, 3) extending in vehicle transverse direction, which are connectable to one another by a mechanical coupling (40) and are workingly connected in each case by their ends remote from the coupling (40) to tyres of the motor vehicle, wherein a first shaft (2) is connected to a first coupling half in the form of a detent disk (7) and a second shaft (3) is connected to a second coupling half in the form of detent means (8) interacting with the detent disk (7), wherein the detent means (8) comprises a pawl element (12A, 12B), which is drivable by a cam disk (11) that may be set in rotation counter to a spring device (10) by a drive source (9), as well as a blocking element (13a, 13B), which is connected to the pawl element (12A, 12B) and by which the shafts (2, 3) in a first end position of the cam disk (11) are connected in a rotationally fixed manner because of a non-positive connection between the detent disk (7) and the blocking element (13A, 13B), and the non-positive connection is released in a second end position of the cam disk (11), **characterized in that** the pawl element (12A, 12B) is designed with two lever arms (12A_1, 12A_2, 12B_1, 12B_2) that are connected rigidly to one another and have a common fulcrum (14A, 14B), wherein the lever arms (12A_1 to 12B_2) are formed in each case with a contact region (12A_1A, 12A_2A, 12B_1A, 12B_2A), via which the lever arms (12A, 12B) are in contact with the cam disk (11).

2. Stabilizer according to claim 1, **characterized in that** the contact regions (12A_1A to 12B_2A) of the lever arms (12A_1 to 12B_2) are designed curved in such a way that there is at least approximately a line contact between the lever arms (12A_1 to 12B_2) and the cam disk (11).

3. Stabilizer according to claim 1 or 2, **characterized in that** the blocking element (13A, 13B) takes the form of a bolt connected in a fixed manner to one of the lever arms (12A_1, 12B_1).

4. Stabilizer according to one of claims 1 to 3, **characterized in that** the detent disk (7) is connected by a serrated gear (43) to the first shaft (2).

5. Stabilizer according to one of claims 1 to 4, **characterized in that** the detent disk (7) is designed with a locking funnel (18A, 18B), in which the blocking element (13A, 13B) is disposed preferably free of play in the closed state of the coupling (40).

6. Stabilizer according to claim 5, **characterized in that** the locking funnel (18A, 18B) is designed in such a way that, given an offset angle between the shafts (2, 3) that is smaller than a limit angle, which is a function of an aperture angle of the locking funnel (18A, 18B) and is preferably 1.25°, the coupling (40) is closable by means of the spring device (10).

7. Stabilizer according to one of claims 1 to 6, **characterized in that** the cam disk (11) is mounted rotatably on the detent disk (7) and is connected to the drive source (9) and the spring device (10) by a gear unit (16).

8. Stabilizer according to one of claims 5 to 7, **characterized in that** the cam disk (11) is designed with an elliptical control path (41), which is designed in the region of the small semiaxes with such constrictions (19A, 19B) and along which the lever arms (12A_1 to 12B_2) are guided in such a way by their contact regions (12A_1A to 12B_2A) that the blocking element (13A, 13B) upon a rotational movement of the cam disk (11) is moved from a position equivalent to the closed state of the coupling (40) substantially radially outwards in relation to the detent disk (7) and is at the same time guided out of the locking funnel (18A, 18B) of the detent disk (7).

9. Stabilizer according to one of claims 1 to 8, **characterized in that** the cam disk (11) at its circumference is designed with a plurality of collar-like regions (21, 22, 23) that extend in sections in circumferential direction, wherein two collar-like regions (22, 23) are provided as stops for a housing-fixed bolt (24), and wherein there is formed between the two stops (22, 23) a control groove (25), which extends over a specific angle segment and into which the bolt (24) engages in such a way that upon contact of the bolt (24) with one of the stops (22, 23) the cam disk (11) is situated in one of the end positions.

10. Stabilizer according to one of claims 1 to 9, **characterized in that** the cam disk (11) is designed with an indicating device, which interacts with position detection sensors in such a way that an actual position of the cam disk (11) is determinable by means of the position detection sensors.

11. Stabilizer according to claim 10, **characterized in that** the position detection sensors take the form of Hall sensors.

12. Stabilizer according to one of claims 1 to 11, **characterized in that** the drive source (9) and the spring device (10) are disposed in the second shaft (3), which is designed at least in sections as a hollow shaft.

13. Stabilizer according to one of claims 1 to 12, **characterized in that** the spring device (10) is designed with a helical spring (17), which in fitted position is preloaded in a way that drives the cam disk (11) in a closing direction of the coupling (40).

14. Stabilizer according to one of claims 1 to 13, **characterized in that** the drive source (9) is designed with an electric motor (15).

15. Stabilizer according to one of claims 1 to 14, **characterized in that** the lever arm (12A_1, 12B_1) of the pawl element (12A, 12B) that is connected to the blocking element (13A, 13B) comprises a lever sub-arm (12A_2B), 12B_2B) extending parallel thereto.

16. Stabilizer according to one of claims 1 to 15, **characterized in that** the working connection between the cam disk (11) and the spring device (10) is designed with such a retaining device (32) that the cam disk (11) is retainable in the actual position counter to the spring action of the spring device (10).

17. Stabilizer according to claim 16, **characterized in that** the retaining device (32) takes the form of a brake that acts upon the rotor of the electric motor (15).

18. Stabilizer according to one of claims 10 to 17, **characterized in that** the position detection sensors are disposed on a printed circuit board (26), on which further electronic components for amplifying the signals of the position detection sensors are disposed.

19. Stabilizer according to one of claims 10 to 18, **characterized in that** the printed circuit board (26) is designed with a control device that is connected to a CAN bus of the motor vehicle so that the coupling (40), in the event of a critical vehicle speed being exceeded, is closed as a function of a control device activation.

## Revendications

1. Stabilisateur (1) pour un véhicule automobile, comportant deux arbres (2, 3) s'étendant dans la direction transversale au véhicule et qui peuvent être couplés l'un à l'autre via un accouplement mécanique (40), lesquels arbres coopèrent respectivement par leurs extrémités opposées à l'accouplement (40) avec les pneus du véhicule automobile, dans lequel un premier arbre (2) est raccordé à un premier mi-accouplement se présentant sous la forme d'un disque d'arrêt (7) et un second arbre (3) à un second mi-accouplement se présentant sous la forme d'un moyen d'encliquetage (8) coopérant avec le disque d'arrêt (7), dans lequel le moyen d'encliquetage (8) présente un élément à cliquet (12A, 12B) qui peut être commandé par une came (11) entraînée en rotation par une source d'entraînement (9) à l'encontre d'un dispositif à ressort (10) et un élément d'encliquetage (13A, 13B) relié à l'élément à cliquet, par lequel élément d'encliquetage les arbres (2, 3) sont reliés solidaires en rotation dans une première position finale de la came (11) en raison d'une liaison active entre le disque d'arrêt (7) et l'élément d'encliquetage (13A, 13B) et la liaison active est dégagée dans une seconde position finale de la came (11), **caractérisé en ce que** l'élément à cliquet (12A, 12B) se présente avec deux bras de levier (12A_1, 12A_2, 12B_1, 12B_2) reliés l'un à l'autre de manière rigide, qui présentent un point de rotation commun (14A, 14B), les bras de levier (12A_1 à 12B_2) se présentant respectivement avec une zone d'application (12A_1A, 12A_2A, 12B_1A, 12B_2A), par laquelle les bras de levier (12A, 12B) sont en contact avec la came (11).

2. Stabilisateur selon la revendication 1, **caractérisé en ce que** les zones d'application (12A_1A à 12B_2A) des bras de levier (12A_1 à 12B_2) sont cintrées de sorte qu'il y ait au moins approximativement un contact linéaire entre les bras de levier (12A_1 à 12B_2) et la came (11).

3. Stabilisateur selon la revendication 1 ou 2, **caractérisé en ce que** l'élément d'encliquetage (13A, 13B) se présente sous la forme d'un boulon relié fixe à l'un des bras de levier (12A_1,12B-1).

4. Stabilisateur selon l'une quelconque des revendications 1 à 3, **caractérisé en ce que** le disque d'arrêt (7) est relié au premier arbre (2) via un engrenage à encoches (43).

5. Stabilisateur selon l'une quelconque des revendications 1 à 4, **caractérisé en ce que** le disque d'arrêt (7) se présente avec une cavité d'arrêt (18A, 18B), dans laquelle l'élément d'encliquetage (13A, 13B) est agencé de préférence sans jeu à l'état fermé de l'accouplement (40).

6. Stabilisateur selon la revendication 5, **caractérisé en ce que** la cavité d'arrêt (18A, 18B) se présente sous une forme telle que l'accouplement (40) puisse être fermé via le dispositif à ressort (10) en présence d'un angle de déport entre les arbres (2, 3) qui est inférieur à un angle limite qui est fonction d'un angle d'ouverture de la cavité d'arrêt (18A, 18B), l'angle limite étant de préférence de 1,25 °.

7. Stabilisateur selon l'une quelconque des revendications 1 à 6, **caractérisé en ce que** la came (11) est montée à rotation sur le disque d'arrêt (7) et est reliée à la source d'entraînement (9) et au dispositif à ressort (10) via une unité de transmission (16).

8. Stabilisateur selon l'une quelconque des revendications 5 à 7, **caractérisé en ce que** la came (11) se présente avec une voie de commande elliptique (41), qui comporte, dans la zone des petits mi-axes, des resserrements (19A, 19B) et sur laquelle les bras de levier (12A_1 à 12B_2) s'appliquent avec leurs zones d'application (12A_1A à 12B_2A) de sorte que élément d'encliquetage (13A, 13B), lors d'un déplacement en rotation de la came (11) en partant d'une position équivalente à l'état fermé de l'accouplement (40), soit déplacé sensiblement radialement vers l'extérieur par rapport au disque d'arrêt (7) et soit guidé hors de la cavité d'arrêt (18A, 18B) du disque d'arrêt (7).

9. Stabilisateur selon l'une quelconque des revendications 1 à 8, **caractérisé en ce que** la came (11) se présente sur sa périphérie avec plusieurs zones (21, 22, 23) en forme de collet s'étendant par sections dans la direction périphérique, dans lequel deux zones (22, 23) en forme de collet sont prévues comme butées pour un boulon (24) fixé au boîtier et dans lequel il est formé entre les deux butées (22, 23) une rainure de commande (25) s'étendant sur un segment angulaire déterminé et dans laquelle s'engage le boulon (24) de sorte que la came (11) se trouve dans l'une des positions finales lorsque le boulon (24) s'applique sur l'une des butées (22 ou 23).

10. Stabilisateur selon l'une quelconque des revendications 1 à 9, **caractérisé en ce que** la came (11) se présente avec un dispositif d'affichage qui coopère avec des capteurs de reconnaissance de position de sorte qu'une position courante de la came (11) puisse être déterminée au moyen des capteurs de reconnaissance de position.

11. Stabilisateur selon la revendication 10, **caractérisé en ce que** les capteurs de reconnaissance de position se présentent sous la forme de capteurs de Hall.

12. Stabilisateur selon l'une quelconque des revendications 1 à 11, **caractérisé en ce que** la source d'entraînement (9) et le dispositif à ressort (10) sont agencés sur le second arbre (3) aménagé au moins par zones en arbre creux.

13. Stabilisateur selon l'une quelconque des revendications 1 à 12, **caractérisé en ce que** le dispositif à ressort (10) se présente avec un ressort hélicoïdal (17) précontraint en position de montage de sorte que le ressort hélicoïdal (17) commande la came (11) dans une direction fermant l'accouplement (40).

14. Stabilisateur selon l'une quelconque des revendications 1 à 13, **caractérisé en ce que** la source d'entraînement (9) se présente avec un moteur électrique (15).

15. Stabilisateur selon l'une quelconque des revendications 1 à 14, **caractérisé en ce que** le bras de levier (12A_1, 12B_1) de l'élément à cliquet (12A, 12B) relié à l'élément d'encliquetage (13A, 13B) présente un bras partiel de levier (12A_2B, 12B_2B) s'étendant parallèlement au bras de levier ci-dessus.

16. Stabilisateur selon l'une quelconque des revendications 1 à 15, **caractérisé en ce que** la coopération entre la came (11) et le dispositif à ressort (10) est réalisée avec un dispositif de retenue (32) tel que la came (11) puisse être retenue dans la position courante à l'encontre de la force élastique du dispositif à ressort (10).

17. Stabilisateur selon la revendication 16, **caractérisé en ce que** le dispositif de retenue (32) se présente sous la forme d'un frein s'engageant sur le rotor du moteur électrique (15).

18. Stabilisateur selon l'une quelconque des revendications 10 à 17, **caractérisé en ce que** les capteurs de reconnaissance de position sont aménagés sur une platine (26), sur laquelle d'autres composants électroniques sont agencés pour renforcer les signaux des capteurs de reconnaissance de position.

19. Stabilisateur selon l'une quelconque des revendications 10 à 18, **caractérisé en ce que** la platine (26) se présente avec un appareil de commande, qui est connecté à un bus CAN du véhicule automobile de sorte que l'accouplement (40) soit fermé lors du dépassement d'une vitesse critique du véhicule en fonction d'une commande du côté appareil de commande.
